(19) Europäisches Patentamt
European Patent Office
Office européen des brevets

(11) **EP 1 858 098 A1**

(12) **EUROPEAN PATENT APPLICATION**
published in accordance with Art. 158(3) EPC

(43) Date of publication:
**21.11.2007 Bulletin 2007/47**

(21) Application number: **06713328.0**

(22) Date of filing: **08.02.2006**

(51) Int Cl.:
*H01M 8/02* (2006.01)    *H01B 1/06* (2006.01)
*H01M 8/12* (2006.01)

(86) International application number:
**PCT/JP2006/302185**

(87) International publication number:
**WO 2006/087959 (24.08.2006 Gazette 2006/34)**

(84) Designated Contracting States:
**CH DE LI**

(30) Priority: **17.02.2005 JP 2005040767**

(71) Applicant: **Nippon Shokubai Co.,Ltd.**
**Osaka-shi, Osaka 541-0043 (JP)**

(72) Inventors:
• **HATA, Kazuo**
**50854 (JP)**
• **MIZUTANI, Yasunobu**
**e, 507-2, Shinpomachi, Tokai-shi, Aichi, (JP)**

• **HISADA, Kouji**
**e, 507-2, Shinpomachi, Tokai-shi, Aichi, (JP)**
• **UKAI, Kenji**
**e, 507-2, Shinpomachi, Tokai-shi, Aichi, (JP)**
• **YOKOYAMA, Misuzu**
**e, 507-2, Shinpomachi, Tokai-shi, Aichi, (JP)**

(74) Representative: **Müller-Boré & Partner**
**Patentanwälte**
**Grafinger Strasse 2**
**81671 München (DE)**

(54) **ELCTROLYTE SHEET FOR SOLID OXIDE FUEL BATTERY, PROCESS FOR PRODUCING THE SAME, AND SOLID OXIDE FUEL BATTERY CELL**

(57) This invention provides an electrolyte sheet for solid oxide fuel cells, **characterized in**: being formed by a doctor blade method or an extrusion molding method; being a scandia partially stabilized zirconia sheet, wherein 4 mol % to 6 mol % scandia is doped in a solid zirconia; a crystal structure thereof has a polycrystalline structure having a main body of tetragonal and including monoclinic phase, wherein a ratio of monoclinic phase (M), calculated by below described formula (1) from a diffraction peak intensity using X-ray diffraction, is 1 % to 80 %; and a Weibull modulus (m) thereof is not less than 10: a ratio of monoclinic phase (M: %) = [{monoclinic (1, 1, 1) + monoclinic (-1, 1, 1)}/{tetragonal and cubic (1, 1, 1) + monoclinic (1, 1, 1) + monoclinic (-1, 1, 1)}] x 100 ····· (1).

EP 1 858 098 A1

**Description**

**TECHNICAL FIELD**

The present invention relates to an electrolyte sheet for solid oxide fuel cell which is flat, has excellent physical strength and has little change in the electrical properties as time elapses, a process for producing the same and solid oxide fuel cell using:this electrolyte sheet.

**BACKGROUND ART**

In recent years, research on solid electrolyte materials has been carried out in various technical fields and applications. In the fields where solid electrolyte materials are used, solid-oxide fuel cell (hereinafter, referred to as "SOFC"), for example, have a high efficiency of power generation in comparison with conventional fuel cell, such as a phosphoric acid type and a molten carbonate type, and have exhaust heat at a high temperature which can be utilized efficiently. Therefore, SOFC's have specifically attracted attention recently.

The forms of SOFCs are roughly categorized into a plate type and a tublar type, and the plate type includes an external manifold type and an internal manifold type which are, in any case, formed in such a manner that single cells having a structure where a solid oxide electrolyte membrane (plate) is placed between a fuel electrode which makes contact with a fuel gas and an oxygen electrode which makes contact with air and a separator is placed outside the fuel electrode and outside the oxygen electrode, respectively, are stacked in multistage.

In addition, in SOFC's having such a configuration, when a fuel gas, such as hydrogen or carbon monoxide, passes through the fuel electrode side and an oxidizing gas, such as air or oxygen, passes through the oxygen electrode side, oxygen ions ($O^{2-}$) generated on the oxygen electrode side are transferred to the fuel electrode by moving through the solid electrolyte membrane, and react with hydrogen ($H_2$) on the fuel electrode side, and thus, electrons are released. As a result, a difference in the potential between the oxygen electrode and the fuel electrode arises, thereby current flows.

Accordingly, in SOFC's, electrical properties of the solid electrolyte material that forms the electrolyte membrane, in particular, the conductance, significantly affects the power generating performance, and therefore, stabilized zirconia having excellent electrical properties has been mainly used as the solid electrolyte material. Here, zirconia ($ZrO_2$) changes in volume when the crystal structure changes from a monoclinic phase to a tetragonal phase at a high temperature (approximately 1150°C). Therefore, as a means for preventing the change in volume, an oxide of calcium (Ca), yttrium (Y) or the like is solid-soluble in.zirconia so that the crystal structure is stabilized, which is referred to as stabilized zirconia.

Recently, scandia stabilized zirconia ($Sc_2O_3$ stabilized $ZrO_2$; hereinafter, referred to as "ScSZ") where the oxide of scandium (Sc) is solid-soluble instead of Ca or Y has attracted attention as having excellent conductive properties.

Japanese Patent No. 3458863, for example, discloses a solid electrolyte sintered body for a solid oxide fuel cell made of scandia partially stabilized zirconia having the crystal structure of a tetragonal single phase which is formed by dissolving Sc in a range from 3 mol % to 6 mol % in zirconia.

According to this Japanese Patent No. 3458863, as a scandia stabilized zirconia powder, which is used as a raw material, a powder manufactured in accordance with a sol/gel method or a coprecipitation method is employed. This powder is a uniform mixture of scandia and zirconia at the atomic level, forming a tetragonal single phase, and does not include any other crystal phases, such as cubic crystal or monoclinic crystal, or unreacted scandia phase.

According to this Japanese Patent No. 3458863, a thin sheet is shaped by a CIP method, a doctor blade method or a calendar rolling method, and the sheet is fired at 1500°C to 1700°C. It is described that the scandia partially stabilized zirconia sheet made of the tetragonal single phase has a high conductance and excellent physical properties and is a dense sintered body into which almost no impurity is mixed.

However, in a production of a 4 mol % to 6 mol % scandia partially stabilized zirconia sheet having a tetragonal single phase, when a scandia partially stabilized zirconia powder having a tetragonal single phase is industrially manufactured, problems due to the very large scale of materials being used arise, as follows: 1) it is difficult to completely and uniformly dispersion scandia in zirconia powder, and the undispersed scandia may be partially existed; 2) the distribution of the temperature in the furnace and the atmosphere in the furnace at the time of calcination may fluctuate; and 3) it is difficult to limit silica, which is an impurity mixed in inevitably, to 10 ppm or lower. Therefore, it is very difficult to obtain a scandia partially stabilized zirconia powder having a tetragonal single phase. Accordingly, great efforts and high costs are required in order to avoid these problems, which become a large obstacle for practical manufacturing at an industrial scale.

In addition, Japanese Unexamined Patent Publication 2003-20272 discloses a process for producing a dense scandia stabilized zirconia sheet having a specific grain size, and furthermore, this gazette discloses that the ratio of tetragonal in the obtained zirconia sheet is estimated from the peak intensities of the tetragonal (111) plane, the cubic (111) plane and the monoclinic (-111) plane using an X-ray diffraction pattern, and zirconia sheets, of which the ratio of tetragonal is less than 80 %, are not preferable.

These sheets, however, are obtained in a scale at laboratory level using a pot mill made of nylon, and the raw powders are obtained through such operations as washing using decantation and the removal of solvents using an evaporator, which are also in a scale at laboratory level. Accordingly, in the case where fuel batteries are industrially and practically manufactured, in view of productivity, it is inevitable for the manufacture of a large:amount of zirconia sheets which become electrolyte films in accordance with the above described methods to have high costs. In addition, variation of the sheet strength for each lot cannot be taken lightly and the Weibull modulus tends to be low, and thus, there is a problem with the reliability of the electrolyte film.

In addition, the Journal of the Ceramics Society 105 [1] 37-42 (1997) discloses a technology titled "Preparation for a $ZrO_2$-$Sc_2O_3$ Based Tetragonal Zirconia Sintered Body in Accordance With Hydrolysis-Homogeneous Precipitation Method and Phase Stability." According to this Journal of the Ceramics Society 105 [1] 37-42 (1997), precipitate obtained by a homogeneous precipitation method using monoclinic zirconia sol and urea is centrifuged, washed with water and dried, and after that, is preliminarily fired at 400°C to 1200°C to give a scandia stabilized zirconia powder.

Regarding the crystal structure of this powder, it is described that 4.5 mol % to 6 mol % stabilized scandia powder which is calcined at 800°C to 1200°C has a ratio of monoclinic phase of approximately 6 mol % or less, and in addition, the ratio of monoclinic phase of a sintered body which is obtained by the uniaxial pressing of 4 mol % to 6 mol % scandia partially stabilized zirconia powder that has been calcined at 600°C, followed by firing at 1300°C to 1600°C, is shown in such a manner that the ratio of monoclinic phase of a 4 mol % scandia stabilized zirconia sintered body that has been fired at 1500°C is 44.4 %.

In addition, it is described that a zirconia powder containing scandia ($Sc_2O_3$) that has been prepared by hydrolysis-homogeneous precipitation method has a content of scandia in a range from 3 mol % to 6 mol % and is densified to a relative density in proximity to 99 % at a temperature for firing of 1300°C or 1400°C by uniaxial pressing method, therefore the powder gives an excellent sintered body.

Furthermore, the J. Am. Ceram. Soc. 82 [10] 2861-64 (1999) discloses the maximum diameter, the minimum diameter and the average diameter of the grain size in the sintered body that is prepared by CIP molding 3 mol % to 7 mol % scandia partially stabilized zirconia powder that has been calcined at 600°C followed by firing at 1300°C, and it is clearly described that the maximum diameter is 0. 57 $\mu$m to 1.1 $\mu$m, the minimum diameter is 0.07 $\mu$m and the average diameter is 0.21 $\mu$m to 0.41 $\mu$m.

The 3 mol % to 7 mol % scandia partially stabilized zirconia powder used here is a powder that has been calcined at 600°C, and the-specific surface area of the 3 mol % scandia doped zirconia powder is as large as 42 $m^2$/g, and this powder is formed by uniaxial pressing and fired at 1300°C to obtain a sintered body.

In order to form a sheet by employing a doctor blade method or an extrusion molding method, which are industrially advantageous processes for producing a sheet, however, a large amount of binder must be used together with the above described powder, and it is not easy to prepare a flat sheet because a green body that has been formed in sheet form easily warps and undulates due to contraction occurred by the vaporization of the binder component and firing when the green body is fired at, for example, approximately. 1300°C. In addition, as for the density of the obtained ceramic sheet; the relative density is approximately 95 % at the highest, and lack of density brings a serious problem as well. Though the relative density increases to approximately 97 % when the temperature for firing is raised to, for example, 1400°C, it cannot be denied that warping and undulation tend to be greater.

Furthermore, as for the dimensions of self-supporting electrolyte sheets which are applied to the fuel cell power generating system, the minimum area is 50 $cm^2$, arid in many cases, the area is 100 $cm^2$ to 400 $cm^2$, and large areas are approximately 900 $cm^2$ while the thickness is 50 $\mu$m to 800 $\mu$m, and the general thickness for practical use is in a range from 80 $\mu$m to 300 $\mu$m. Therefore, it is not easy to fabricate a ceramic sheet having such an area and a thickness by a uniaxial pressing or CIP molding.

The present invention is provided in view of the above described situations, and an object thereof is to provide an electrolyte sheet for a solid oxide fuel cell which is flat, has excellent mechanical strength, is highly reliable in strength judging from its high Weibull modulus, has little change in the electrical properties as time elapses and can be industrially mass produced using inexpensive materials which are widely available in the industry, as well as a process for producing the same; and to provide a high performance solid oxide fuel cell using this electrolyte sheet.

**Disclosure of the Invention**

The electrolyte sheet for a solid oxide fuel cell according to the present invention that has accomplished the above described problems, comprises a scandia partially stabilized zirconia sheet containing 4 mol % to 6 mol % of doped scandia with respect to zirconia, and formed by a doctor blade method or an extrusion molding method, wherein a crystal structure thereof has a polycrystalline system having a main body of tetragonal and including monoclinic phase, a ratio of monoclinic crystal (M), calculated by below described formula (1) from the diffraction peak intensity using X-ray diffraction, is 1 % to 80 % and the Weibull modulus (m) is not less than 10:

$$\text{Ratio of monoclinic phase (M: \%)} = [\{\text{monoclinic } (1, 1, 1) + \text{monoclinic } (-1, 1, 1)\}/\{\text{tetragonal and cubic } (1, 1, 1) + \text{monoclinic } (1, 1, 1) + \text{monoclinic } (-1, 1, 1)\}] \times 100 \ldots\ldots (1)$$

In the electrolyte sheet for a solid oxide fuel cell according to the above described present invention, wherein an average value of the grain size in the electrolyte sintered body as observed by using a scanning electron microscope is preferably 0.2 $\mu$m to 0.8 $\mu$m, a maximum diameter thereof is preferably 0.4 $\mu$m to 1.5 $\mu$m, a minimum diameter thereof is preferably 0.1 $\mu$m to 0.3 $\mu$m, and a coefficient of variation is preferably not greater than 40 %.

This electrolyte sheet may include 10 ppm to 500 ppm of silica as another component. In addition, for the purpose of practical use of the electrolyte sheet of the present invention, the preferable size the area of not smaller than 50 cm$^2$ and the thickness of 50 $\mu$m to 800 $\mu$m.

In addition, a production method of the present invention is regarded as a preferable method for producing the electrolyte sheet for a solid oxide fuel cell having the above described properties. The method is characterized in using a scandia partially stabilized zirconia powder as a raw powder, wherein the powder is calcined at 800°C to 1200°C, a ratio of monoclinic phase in the crystal structure is 1 % to 80 %, and 4 mol % to 6 mol % of scandia is solid-soluble in solid zirconia, forming a green sheet from a slurry, a paste or a kneaded material containing the powder by a doctor blade method or an extrusion molding method, cutting the green sheet into a predetermined shape to be a shaped body, placing the shaped body on a shelf and heating at 1300°C to 1450°C, and a period of time for a temperature of the shaped body to be lowered to 200°C from 500°C during the process of cooling is 10 minutes to 90 minutes.

In addition, a solid electrolyte fuel cell in which the electrolyte sheet for a solid oxide fuel cell of the present invention having the above described properties is installed has excellent power generated performance and a long life, which is also included as an object of protection of the present invention.

**Best Mode for Carrying Out the Invention**

The electrolyte sheet for a solid oxide fuel cell of the present invention is characterized in that the manufacturing method is specified to a doctor blade method or an extrusion molding method, which are suitable for industrial mass production, as described above, and the sheet is specified to a scandia partially stabilized zirconia sheet wherein 4 mol % to 6 mol % of scandia is doped in solid zirconia, which has recently been drawing attention as a sheet for solid oxide fuel cells, a crystal structure thereof has a polycrystalline system having a main body of tetragonal and including monoclinic phase, and in addition, the Weibull modulus is set to a value which is not lower than 10. In addition, the sheet is characterized in that the average value of the grain size in the sintered body (that is to say, the grain size) as observed using a scanning electron microscope is 0.2 $\mu$m to 0.8 $\mu$m, the maximum diameter thereof is 0.4 $\mu$m to 1.5 $\mu$m, the minimum diameter thereof is 0.1 $\mu$m to 0.3 $\mu$m, and the coefficient of variation thereof is not greater than 40 %, and in this case, electrolyte sheets which are flat and without any distortion such as warping or undulation and have a high strength against bending and a variation thereof is little, and have excellent properties in terms of mechanical strength, and in addition, have little change in the electrical properties as time elapses, which are important properties when the sheet is put into practical use in a fuel cell, can be obtained with high success, even when mass produced.

Hereinafter, the reasons for setting the above described requirements in the present invention are explained, and the working effects accompanying these are explained.

First, the present invention is specified to a "formed body which is formed by a doctor blade method or an extrusion molding method". The reason for this is as follows. That is to say, as for the method for producing a ceramic electrolyte sheet, a uniaxial pressing method and a CIP molding method are known, as disclosed in the above described Journal of the Ceramics Society 105 [1] 37-42 (1997), J. Am. Ceram. Soc. 82 [10] 2861-64 (1999) and the like, in addition to a doctor blade method and an extrusion molding method. These molding methods, however, are not suitable for the mass production of thin ceramics sheets having a large area, which is the intent of the present invention, and thus, in view of productivity and costs, the manufacturing methods which are practically possible are almost limited to the doctor blade method or the extrusion molding method. Therefore, according to the present invention, the manufacturing methods are specified to the doctor blade method and an extrusion molding method, considering practical productivity in an industrial scale for thin sheets having a large area.

In addition, according to the present invention, the configuration of concrete zirconia sheets is specified to a "scandia partially stabilized zirconia sheet wherein 4 mol % to 6 mol %, of scandia is doped in solid zirconia", and the reason for this is as follows. That is to say, in the case where the content of scandia is less than 4 mol %, the ratio of the monoclinic phase in the crystal structure of the sintered body becomes high and the stability of the zirconia becomes insufficient, thereby, ion conductivity of the sheet becomes low. On the other hand, in the case where the content of scandia exceeds 6 mol %, cubic phase comes to be mixed in the crystal structure of the sintered body and the grain size becomes large, making the grain coarse, and the distribution thereof spreads, and the electrical properties deteriorate greatly as time elapses.

An appropriate amount of scandia is doped in solid zirconia so that the electrical properties is prevented from deteriorating as time elapses and the grain size in the sintered body is properly controlled while making the distribution thereof extremely small, and a more preferable content of scandia, in order to improve the electrical properties, is not less than 4 mol % or not more than 5 mol %.

Furthermore, according to the present invention, the crystal structure of the ceramic body must be a polycrystalline system having a main body of tetragon and including monoclinic phase. Here, the scandia partially stabilized zirconia sheet made of tetragon monoclinic crystal phase has a high conductivity and excellent mechanical properties, as disclosed in the above described Japanese Patent No. 3458863. However, in order to obtain a tetragonal single phase structure without including any other phases, the dispersion of scandia which is doped in solid zirconia must be controlled to be uniform at the micro level, and in addition, the fluctuation in the process conditions, including drying, calcination and firing, must be reduced as much as possible. Therefore, in the case where a thin ceramic sheet having a large area is obtained as intended by the present invention, it is almost impossible to eliminate the above described fluctuation as a matter of practice.

Therefore, according to the present invention, such difficulties are avoided, allowing for a mixture of monoclinic phase as another crystal with tetragonal phase, which is the main body of the crystal structure, and thus, the difficulty in practical production is eliminated, and as for the problems with the performance that may arise as a result of the mixture, particularly that concerning the conductivity and the mechanical properties, they can be solved by securing a target performance by the control of the particle diameter (that is to say, grain size) of the sintered body.

Here, the ratio of monoclinic phase refers to the value that is calculated by the above described formula (1) from the diffraction peak intensity using X-ray diffraction.

The ratio (M) of monoclinic phase calculated by the above described calculation formula (1) is preferably not less than 1% and not higher than 80 %. This is because in the case where the crystal phase is observed as time elapses, comparing to when the ratio (M) of monoclinic phase is 0 %, the deterioration of electrical properties as time elapse, especially in a high temperature range exceeding 1000 °C, is hardly caused when the crystal structure including approximately 1 % of monoclinic phase. In addition, the crystal structure including approximately 1 % of monoclinic phase has a wide allowable range in terms of the conditions for manufacture as compared to that of which the ratio of monoclinic phase is 0 % (that is to say, a tetragonal single phase), and therefore, the manufacture becomes easy. In the case where the ratio of monoclinic phase exceeds 80 %, the mechanical strength of a shaped body in sheet form becomes lower, and therefore, the ratio must be 80 % at the highest. A more preferable value of the ratio of monoclinic phase is not less than 5 % and not higher than 50 %, and even more preferable value is not less than 20 % and not higher than 40 %.

Here, the above described calculation formula (1) is a formula described in J. Am. Ceram. Soc. 82 [10] 2861-64 (1999), and monoclinic (1, 1, 1) and monoclinic (-1, 1, 1), denoted in the formula are the peak heights of the peaks representing the (1, 1, 1) plane and the (-1, 1, 1) plane of the monoclinic phase which appears in the measurement range having 2θ of from 25 ° to 35 °, which is measured using an X-ray diffraction apparatus ("RU-300", made by Rigaku Corporation, target: Cu, monochrometer, output: 50 kV-300 mA) followed by carrying out the peak fitting procedure.

In addition, tetragonal and cubic (1, 1, 1) denotes the sum of the peak height of the tetragonal (1, 1, 1) plane and the peak height of the cubic (1, 1, 1) plane, which have very close diffraction angles, and therefore, in many cases, cannot be precisely separated from each other. Being based on common sense, cubic phases are considered to be very few, and thus, the peak representing cubic (1, 1, 1) is observed as a shoulder of the peak of tetragonal (1, 1, 1).

In addition, the present invention is technically and greatly characterized in the grain size observed using a scanning electron microscope where the average value thereof is specified to not less than 0.2 $\mu$m and not greater than 0.8 $\mu$m, the maximum diameter thereof is specified to not less than 0.4 $\mu$m and not greater than 1.5 $\mu$m, the minimum diameter thereof is specified to not less than 0.1 $\mu$m and not greater than 0.3 $\mu$m, and the coefficient of variation thereof is set to 40 % or less.

Here, in the case where the average diameter thereof is less than 0.2 $\mu$m, the maximum diameter thereof is less than 0.4 $\mu$m and the minimum diameter thereof is less than 0.1 $\mu$m, firing tends to become insufficient, while in the case where the average diameter thereof exceeds 0.8 $\mu$m, the maximum diameter thereof exceeds 1.5 $\mu$m and the minimum diameter thereof exceeds 0.3 $\mu$m, mainly the strength, the endurance at a high temperature and the persistence in the electrical properties become insufficient.

In addition, in the case where the coefficient of variation of the grain size exceeds 40 %, the grain size distribution of the sintered body becomes large, making the strength, the endurance at a high temperature and the persistence in the electrical properties inferior, and the Weibull modulus lowers to 10 or lower. Here, the Weibull modulus is regarded as a material constant which reflects the degree of variation in the strength, and crystals where this value is small are evaluated as greatly lacking reliability. Here, the value of the Weibull modulus (m) is evalutated as follows.

Method for Measuring Weibull Modulus (m):

Twenty test pieces in sheet form having a width of 4 mm × a thickness of 0.2 mm × a length of 40 mm are prepared, and the three-point flexural strength is measured for each test piece in compliance with the method of JIS R1601 without adjusting surface roughness or chamfering. Next, on the basis of the following formula (2), which is described in "Ceramic Strength and Estimation of Ceramics Reliability" by Yoshiharu Ozaki, page 11, right column, in "Refractory," 39-489, 1987-No. 9, a graph with lnln{1/(1- Pf)} on the longitudinal axis and ln (σf - σu) on the lateral axis is plotted where a value of the above described strength against three-point flexural strength is employed as of, and the value of (m) is obtained from the inclination thereof in accordance with a least-square method (here, - mlnσ0 is an intercept of the graph):

$$\mathrm{InIn}\{1/(1 - \mathrm{Pf})\} = \mathrm{mIn}(\sigma f - \sigma u) - \mathrm{mIn}\sigma 0 \ldots (2)$$

wherein, Pf denotes a breakdown probability and is defined by Pf = n/ (N + 1) (here, N denotes the number of samples and n denotes the nth sample), of is the bending strength against breakage, m denotes the Weibull modulus, σ0 denotes the normalization factor and σu denotes the stress value which becomes 0 for this bending strength against breakage or the weaker strength.

Though the lower limit of the coefficient of variation is not particularly limited, in the case where the coefficient of variation is lower than 20 %, the grain size becomes too uniform, making the filling properties of grains lower, and the density tends to slightly lower, and therefore, it is preferable for the coefficient of variation to be not less than 20 %.

As for a more preferable grain size, taking into full consideration the strength, the endurance at a high temperature and the persistence of the electrical properties, the average value is not less than 0.25 μm and not greater than 0.5 μm, the maximum diameter is not less than 0.45 μm and not greater than 1.2 μm, the minimum diameter is not less than 0.1 μm and not greater than 0.2 μm, and the coefficient of variation is not less than 20 % and not greater than 35 %.

Here, as for the grain size in the sintered body, photographs of the surface of the scandia partially stabilized zirconia sheet are taken using a scanning electron microscope (10,000 to 20,000 times greater), and individual pieces of data are collected from the values obtained by measuring the diameters of all the particles within view of the photograph using slide calipers, and thus, the average diameter, the maximum diameter, the minimum diameter and the coefficient of variation of all the grains are obtained. Here, when grain size are measured using slide calipers, particles which are located at an end in the photograph in such a manner that the entirety of the particle is not in the visual field are not taken as an object for measurement, and in addition, the average value between the major axis and the minor axis of grains having different dimensions in the longitudinal and lateral directions is regarded as the grain diameter for these grains.

In the scandia partially stabilized zirconia sheet of the present invention, it is preferable for the content of silica to be as small as possible, taking into consideration the durability of the electrolyte sheet for solid oxide fuel cells, in particular, the stability in terms of the conductive properties over time. However, in view of the circumstance of the material, it is difficult to make the mixture of silica zero (0), and in addition, the present inventors found that a slight amount of silica has functions of improving sintering performance, and the strength of the sintered body may further be improved, and therefore, it is preferable for approximately 10 ppm or more of silica to be contained, it is more preferable for approximately 20 ppm or more of silica to be contained, and furthermore, it is most preferable for not less than 50 ppm silica to be contained. Here, though it is effective to increase the content of silica to 500 ppm or higher in order to improve the sintering properties, the amount of insulating material increases as a result of involvement of silica in the solid phase reaction with zirconia and scandia, and the conductivity, as well as the power generating performance, are negatively affected, when the content of silica exceeds 5.00 ppm. Therefore, it is appropriate to limit the content of silica to 500 ppm or less at most, preferably 300 ppm or less, more preferably 200 ppm or less, and most preferably 150 ppm or less.

In addition, according to the present invention, in order to further improve the strength of the sintered body sheet at room temperature or high temperatures, it is effective for the sintered body sheet to contain a small amount of at least one type of oxide for dispersion-reinforcement (approximately 0.1 mass % to 2 mass % for the scandia partially stabilized zirconia powder). That is to say, oxide for dispersion-reinforcement dispersion enhancing type oxides work as sintering agents, contribute to reduction of the firing temperature for the scandia partially stabilized zirconia, and as a result, it can be expected that the growth of particles during the firing process will be restricted. In addition, it can be expected that oxide for dispersion-reinforcement exist in the vicinity of grain boundaries in the scandia partially stabilized zirconia, and thus, prevent the grains from sintering together and coarsening when exposed to high temperatures for a long period of time, and at the same time, transformation from tetragonal phase to monoclinic phase or cubic phase is also prevented.

As the above described oxide for dispersion-reinforcement, oxides of elements in groups 4A, 5A, 3B, 4B and 5B are selected, and concretely, oxides of Ti, V, Nb, Ta, Al, Ga, In, Ge, Sn and Pb can be cited, and among them, oxides of Ti, Nb, Al, Ga, In, Ge, Sn, Pb, Sb and Bi are particularly preferable, and titanium oxide, niobium oxide, aluminum oxide and bismuth oxide are more preferable.

Here, though the size of the electrolyte sheet for solid oxide fuel cells of the present invention is determined in accordance with the dimensions and form of the fuel cell in which the sheet is used, and does not particularly become a limiting factor, it is appropriate for the area to be at least 50 cm$^2$ or larger, or 100 cm$^2$ or larger, for practical use, in order to secure sufficient power generating performance, considering practicality of the fuel cell.

Incidentally, a fuel cell is composed of a number of sets of stacked single cells, usually 50 or more, in some cases 100 or more, and a single cell is layered on top of each other, having such a structure that a fuel electrode is provided on one side of an electrolyte sheet of the present invention, and an air electrode is provided on the other side; and furthermore, separators are placed on the outside, and the area of the electrolyte sheet is a factor greatly affecting the power generating performance, and in the case where the size of the electrolyte sheet is less than 50 cm$^2$, lack of performance as practical power generating apparatus cannot be ignored, though it may be useful at the experimental level or as a test machine.

Squares (including squares, rectangles and diamonds), discs and ellipses are included in the form of electrolyte sheets, and in some cases, a hole may be created in the sheet in plate form, in order to adjust the center or secure sheets to each other where they overlap, and area of sheet this case means total area, including the hole.

Though the thickness of the electrolyte sheet is not particularly limited, in the case where the sheet is too thin, the resistance against the load for layering may be insufficient, due to the lack of strength in the case where the sheet is too thin, and in addition, there is a risk that shielding the fuel gas may be insufficient, due to pinhole defects, and therefore, it is preferable for the thickness to be at least 50 μm or greater, and it is more preferable for the thickness to be 80 μm or greater. Though the upper limit of the thickness is not particularly limited, in the case where the thickness is too great, the cost for the materials becomes too high, and in addition, the conductivity lowers, and thus, the power generating performance is negatively affected, and therefore, it is appropriate for the thickness to be 800 μm or less, and it is more preferable for it to be 500 μm or less.

As described above, in the electrolyte sheet for the solid oxide fuel cell of the present invention, the average value, the maximum diameter and the minimum diameter of the sintered body grain size are specified and the coefficient of variation is also specified, and thus, the fuel cells becomes flat and has excellent mechanical strength, and change in the electrical properties over time, which significantly affects the life of the fuel cell, becomes small.

In addition, the fuel cell of the present invention is composed of a number of stacked single cells, usually 50 or more, in some cases 100 or more, which are layered on top of each other, having such a structure that a fuel electrode is provided on one side of an electrolyte sheet as that described above, and an air electrode is provided on the other side, and furthermore, separators are placed on the outside, and thus, the properties of the above described electrolyte sheet are sufficiently exerted , and excellent power generating performance and a long power generating life is exerted.

Though the method for producing the electrolyte sheet of the present invention having the above described properties is not particularly limited, it is preferable to employ the method shown in the following, because an electrolyte sheet having the above described properties is easily obtained.

The producing method is a method where a scandia partially stabilized zirconia powder is used as a raw powder, wherein the powder is calcined at 800°C to 1200°C, a ratio of monoclinic phase in the crystal phase thereof is 1 % to 80 %, and 4 mol % to 6 mol % of scandia is doped in solid zirconia, a slurry paste or a kneaded mixture containing the powder is formed into a sheet by a doctor blade method or an extrusion molding method, this green sheet is cut into a predetermined shape to be a shaped body, and after that, the shaped body is placed on a shelf and heated at 1300°C to 1450°C, and a period of time for a temperature of the shaped body to be lowered to 200°C from 500°C during a process of cooling is from 10 minutes to 90 minutes.

In this producing method, the temperature for calcination the raw powder is set within a range from 800°C to 1200°C because the specific surface area of the powder becomes large when the temperature for calcination is less than 800°C, and therefore, a large amount of binder is required to form a sheet and warping and undulation is caused easily when the green sheet is heated. In addition, when the temperature becomes so high as to exceed 1200°C, the powder is sintered together easily, and thus, the specific surface area becomes small, further, the fired sheet is not sufficiently fired, and it becomes difficult to obtain a sufficiently strong sheet. A more preferable temperature for calcination is not lower than 900°C and not higher than 1100°C. In addition, it is desirable for the crystal system of the calcined raw powder to have a ratio of monoclinic crystal of 1 % or higher and 80 % or lower. In the case of less than 1 %, it becomes easy for the electrical properties to deteriorate over time, particularly in high temperature ranges exceeding 1000°C, and conversely, when the ratio of monoclinic phase exceeds 80 %, the finally obtained sintered body sheet tends to be lacking in strength. A more preferable range for the ratio of monoclinic phase is not less than 5 % and not higher than 60 %, and the most preferable range is not less than 20 % and not higher than 50 %.

The reason why the amount of scandia doped in solid zirconia for partial stabilization is set to 4 mol % to 6 mol % is the same as that described for the elements of the electrolyte sheet of the present invention.

In addition, the temperature for firing the sheet formed of a slurry, a paste or a kneaded mixture that includes the above described powder by a doctor blade method or an extrusion molding method may be controlled within a range from 1300°C to 1450°C. Firing become insufficient at temperatures below this range, and the density become inferior, and conversely, when the temperature is too high, firing is excessive and the density become low, making the strength insufficient. A more preferable temperature for firing is not lower than 1350°C and not higher than 1430°C.

The crystal system of the scandia partially stabilized zirconia sintered body is greatly affected in the process for cooling the shaped body after heating and firing to room temperature during the time for the temperature to be lowered to 200°C from 500°C, and when the time for this process is controlled within a range from 10 minutes to 90 minutes, the ratio of monoclinic phase is limited to a certain degree, probably because transition from tetragonal phase, which is a metastable phase, to monoclinic phase is affected by the rate of lowering of the temperature.

When the temperature is so high as to exceed 500°C or the temperature is so low as to be lower than 200°C, the ratio of monoclinic phase in the crystal system of the shaped body is hardly affected. In addition, in the case where the time when the temperature is between the above described temperatures is less than 10 minutes, the heat impact becomes too great, therefore, breaking and cracking are easily caused. On the other hand,when the time exceeds 90 minutes, the ratio of monoclinic phase is hardly affected, and thus, time ends up being wasted. A more preferable time for between these temperatures is not less than 20 minutes and less than 60 minutes.

Here, it is desirable to use a tunnel type continuous furnace instead of a batch type firing furnace, in order to improve the productivity by efficiently heating and firing green sheets. Incidentally, in batch type firing furnaces, intensive cooling is necessary by introducing air for cooling in order to control the time for the temperature to be lowered to 200°C from 500°C to 10 minutes to 90 minutes. While in the tunnel type continuous furnaces, the shaped body or the shelf, which are put outside the furnace, is exposed to the atmosphere at room temperature for in a short period of time, and therefore, the temperature of the shaped body or shelf when the heated and the fired shaped body comes in the vicinity of the tunnel exit, where the temperature is adjusted to 500°C, is measured using a surface thermometer, the temperature of the shaped body or shelf down to 200°C is measured over time in the same manner, and thus, the time for the above described temperature range can be determined.

By the way, the grain size in the finally obtained sintered body sheet is affected by the composition of the grain size of the used raw powder to a certain degree, in such a manner that use of coarse powder makes the diameter of the particles in the sintered body relatively large and use of fine powder makes the diameter of the particles relatively small. In addition, it is desirable for the used raw powder to have an average particle diameter in a range from 0.3 $\mu$m to 1.0 $\mu$m, and as uniform a particle diameter as possible (distribution of particle size narrow), and concretely, use of powder where not less than 90 volume % of particles have a diameter from 0. 8 $\mu$m to 2. 5 $\mu$m is desirable, in order to efficiently obtain a sintered body sheet having the above described grain size, which is prescribed according to the present invention.

What is preferable when adjusting the grain size in the sintered body sheet, however, is an appropriate composition in terms of the grain size of the solid content included in the slurry, paste or kneaded mixture when a green shaped body which is the material to be sintered is obtained. Use of a slurry which satisfies such requirements for the composition in terms of the grain size that the average particle diameter (50 % volume diameter) is 0.2 $\mu$m to 0.6 $\mu$m, the 90 % volume diameter is 0.6 $\mu$m to 1.5 $\mu$m and the limit particle diameter (100 % volume diameter) is 3 $\mu$m or less is preferable, because a sintered body sheet which satisfies the requirements for the above described grain size can be obtained without fail.

Incidentally, a method for kneading and crushing a suspension including a raw powder uniformly in a ball mill or the like is employed when the above described slurry, paste or kneaded mixture is prepared, a part of the raw powder further aggregates during the process for preparing the slurry, and furthermore, a part of the aggregated raw powder may be crushed, depending on the conditions for kneading (including the kind of dispersing agent and the added amount), and therefore, the composition of the raw powder in terms of the grain size is not necessarily the same as composition in terms of the particle size of the solid content in the slurry. Accordingly, when a sintered body sheet of the present invention is manufactured, it is desirable for the composition in terms of the particle size in the solid content included in the slurry before the shaped body (green body) in sheet form which is not fired is formed to be adjusted within the above described appropriate range, as this is the factor which affects the grain size in the sintered body sheet the most.

Here, the composition in terms of the grain size in the above described raw powder and in the solid content in the slurry, paste or kneaded mixture means a value measured by the above described method. That is to say, the composition in terms of the grain size of the raw powder has a value measured using a laser diffraction type particle size distribution analyzer "LA-920" made by Horiba Ltd. A solution for the measurement is prepared by adding 0.2 mass % of sodium metaphosphate to distilled water as a dispersing agent is used as a dispersing medium, and 0.01 mass % to 0.5 mass % of a raw powder is added to approximately 100 cm$^3$ of this dispersing medium and processed for 1 minute with ultrasonic waves so as to be dispersed. In addition, the composition in terms of the particle size of the solid content in the slurry, paste or kneaded mixture is a value measured by using a solution for the measurement. The solution is prepared by using a solvent having the same composition as the solvent in the slurry, paste or kneaded mixture is used as a dispersing medium, 0.1 mass % to 1 mass % of the slurry, paste or kneaded mixture is added to 100 cm$^3$ of the dispersing medium and processed for 1 minute with ultrasonic waves in the same manner so as to be dispersed.

In addition, when the sintered body sheet of the present invention is formed, the above described raw powder and the slurry, paste or mixture made of a binder and a dispersing medium are spread on a supporting plate or a carrier film so as to be formed into a sheet by a doctor blade molding method or an extrusion molding method, this is dried, and the dispersing medium is volatilized so that a green sheet is obtained, the obtained green sheet is cut and adjusted to an appropriate size by punching and the like, and after that, placed on the refractory slab in a porous setter and heated and fired for approximately 1 to 5 hours at a temperature of 1300°C to 1450°C.

There are no particular limitations in terms of the type of binder used here, and conventionally known organic and inorganic binders can be use by selecting arbitrarily. As organic binders, for example, ethylene based copolymers, styrene based copolymers, acrylate based and methacrylate based copolymers, vinyl acetate based copolymers, maleic acid based copolymers, vinyl butyral based resins, vinyl acetal based resins, vinyl formal based resins, vinyl alcohol based resins, waxes and celluloses, such as ethyl cellulose, can be exemplified.

Among them, (meth)acrylate based copolymers having a number average molecular weight of 20,000 to 200,000, preferably 50,000 to 100,000, obtained by polymerizing or copolymerizing at least one type of alkyl acrylates having an alkyl group of which the number of carbons is 10 or less, such as methyl acrylate, ethyl acrylate, propyl acrylate, butyl acrylate, isobutyl acrylate, cyclohexyl acrylate and 2-ethyl hexyl acrylate, alkyl methacrylates having an alkyl group of which the number of carbons is 20 or less, such as methyl methacrylate, ethyl methacrylate, butyl methacrylate, isobutyl methacrylate, octyl methacrylate, 2-ethyl hexyl methacrylate, decyl methacrylate, dodecyl methacrylate, lauryl methacrylate and cyclohexyl methacrylate, hydroxy alkyl acrylates and hydroxyalkyl methacrylates having a hydroxy alkyl group, such as hydroxy ethyl acrylate, hydroxy propyl acrylate, hydroxy ethyl methacrylate and hydroxy propyl methacrylate, amino alkyl acrylates and amino alkyl.methacrylate, such as dimethylaminoethyl acrylate and dimethylaminoethyl methacrylate, and carboxyl group containing monomer, such as (meth)acrylic acid, maleic acid and maleic acid half esters, such as monoisopropyl malate, are recommended, from the point of view of moldability when a green shaped body is formed, strength, and heat decomposability at the time of firing. These organic binders can be used alone, or two or more types can be used in an appropriate combination, if necessary. A polymer of a monomer which includes 60 mass % or more of isobutyl methacrylate and/or 2-ethyl hexyl methacrylate is most preferable.

In addition, as inorganic binders, zirconia sols, silica sols, alumina sols and titanium sols can be used alone, or two or more types can be mixed for use.

An appropriate ratio of the raw powder to the binder for use is 5 mass parts to 30 mass parts of the latter to 100 mass parts,of the former, and a range from 10 mass parts to 20 mass parts of the latter is more preferable. In the case where the amount of binder used is insufficient, the strength and flexibility of the green body become insufficient, and conversely, in the case where the amount of binder is too great, it becomes difficult to adjust the viscosity of the slurry, and in addition, decomposition and release of the binder component become large and harsh at the time of firing, and it becomes difficult to obtain a uniform sintered body.

In addition, as the solvent used at the time of manufacture of a green shaped body, water, alcohols, such as methanol, ethanol, 2-propanol, 1-butanol and 1-hexanol, ketones, such as acetone and 2-butanone, aliphatic hydrocarbons, such as pentane, hexane and heptane, aromatic hydrocarbons, such as benzene, toluene, xylene and ethyl benzene, and ester acetates, such as methyl acetate, ethyl acetate and butyl acetate, are appropriate to be selected for use. These solvents can be used alone, or two or more types can be used in an appropriate mixture. An appropriate amount for use of these solvents may be adjusted taking the viscosity of the slurry, paste or mixture when the green shaped body is manufactured into sideration.

When preparing the above described slurry, a dispersing agent made of a polymer electrolyte, such as polyacrylic acid or ammonium polyacrylate, an organic acid, such as citric acid or tartaric acid, a copolymer of isobutylene or styrene and maleic anhydride and an ammonium salt or amine salt thereof, a copolymer of butadiene and maleic anhydride and an ammonium salt thereof, for accelerating deflocculation and dispersion of the raw powder; a plasticizing agent made of a phthalate, such as dibutyl phthalate or dioctyl phthalate, and a glycol or glycol ether, such as propylene glycol, for providing flexibility to the green shaped body; and furthermore, a surfactant and a defoaming agent, can be added if necessary.

A slurry having the above described mixture of materials is shaped in accordance with any of the above described methods and dried, so that a green shaped body is obtained, and after that, this green shaped body is heated and fired at a. predetermined temperature to obtain a scandia partially stabilized zirconia sheet of the present invention.

In the firing process, as a means for obtaining a sintered body in thin sheet form which is highly flat and has no deformation, such as warping or undulation, it is desirable that the green sheet is subjected to being sandwiched between smooth and porous sheets having air permeability in such a manner that the periphery thereof does not stick out and followed by being fired, or on the green sheet where the porous sheet is superimposed in such a manner that the periphery of the green sheet does not stick out, and followed by firing the green sheet.

**Examples**

In the following, the present invention is concretely described by citing examples and comparative examples, but the present invention is not limited by the following examples, and it is possible to make an appropriate modifications within a scope which matches the gist of the above and below description, and these modifications are all included in the technical scope of the present invention.

Example 1

A mixed powder of 100 mass parts of a zirconia powder partially stabilized by 4 mol % of a scandia (trade name "4ScSZ," made by Daiichi Kigenso Kagaku Kogyo Co., Ltd., content of silica: 80 ppm) which was calcined for 2 hours at 1000°C and 1 mass part of a highly pure alumina powder (trade name "TM-D," made by Taimei Chemicals Co., Ltd., content of silica: 15 ppm), 14 mass parts, calculated in solid form, of a binder (molecular weight: 90,000, glass transition temperature: -36°C) consisting of (meth)acrylate copolymer which was copolymerizing a mixed monomer of 2 mass % of ethyl acrylate, 38 mass % of 2-ethylhexyl acrylate, 4.94 mass % of methyl methacrylate, 25 mass % of cyclohexyl methacrylate and 0.06 mass % of acrylic acid in toluene with azobisisobutyronitrile as a polymerization initiator, 1 mass part of dibutyl phthalate as a plasticizing agent, and 50 mass parts of a mixed solvent of toluene/isopropyl alcohol (mass ratio: 3/2) as a dispersing medium, were put in a ball mill made of nylon having an internal volume of 100 liters and equipped with a zirconia ball having a diameter of 10 mm inside followed by being kneaded for 40 hours at 45 rpm to prepare a slurry.

A portion of the slurry was taken and diluted with a mixed solvent of toluene/isopropyl alcohol (mass ratio: 3/2), and the particle size distribution of the solid component in the slurry was determined using a laser diffraction type particle size distribution analyzer "LA-920" made by Horiba Ltd., and it was obtained that the average particle diameter (diameter of 50 volume %) was 0.3 $\mu$m and the diameter of 90 volume % was 1.2 $\mu$m.

The slurry was condensed and defoamed using a vacuum defoaming machine with a solvent collecting apparatus having an internal volume of 50 liters, so that the viscosity was adjusted to 3 Pa·s (23°C), and finally, filtered through a 200 mesh, and then, coated on a polyethylene terephthalate (PET) film by a doctor blade method to give a green sheet having a width of approximately 50 cm and a thickness of approximately 130 $\mu$m. The green sheet was cut into a square having sides of approximately 125 mm, and the cut green sheet was sandwiched with porous plates of 99.5 % alumina having a maximum height of undulation of 10 $\mu$m from the top and the bottom, and then placed on a refractory slab made of alumina so as to be fired at 1350°C after defatting in a tunnel type continuous furnace having an internal effective width of 20 cm and a length of 25 m, and thus, a 4 mol % scandia partially stabilized zirconia sheet having sides of 100 mm and a thickness of 100 $\mu$m was obtained.

At the same time, 50 rectangular test pieces of 5 mm $\times$ 50 mm per heating and firing lot for evaluating the strength were prepared, and 10 rectangular test pieces of 30 mm $\times$ 20 mm per heating and sintering lot for measuring X-ray diffraction were prepared.

At this time, a surface thermometer is installed inside the furnace body at approximately 5 cm from the outlet of the continuous furnace, and the temperature in this portion was adjusted to 500°C. In addition, the temperature of the refractory slab made of alumina coming out of the outlet of the continuous furnace was measured using a surface thermometer, and the period until the temperature became 200°C was measured.

In addition, the test pieces for evaluating the strength were used to measure the three-point flexural strength at room temperature in compliance with JIS R1601, so that the Weibull modulus was obtained, and furthermore, the strength of the pieces after being held in an electrical furnace at 1000°C for 500 hours or more was measured in the same manner at room temperature, and the resistance to high temperature was caluculated using the following formula, from the ratio of the initial strength to the strength after the piece was held at a high temperature for a long period of time, and thus, the results shown in Table 1 were obtained.

$$\text{Resistance to high temperature} = (\text{strength after piece held for 500 hours at 1000°C})/(\text{initial strength})$$

In addition, the conductance of the test pieces exposed to the above described temperature was measured in accordance with the following method. That is, a platinum wire having a diameter of 0.2 mm was wound around the test piece exposed to the above described temperature in four places at intervals of 1 cm and a platinum paste was applied followed by being dried and fixed at 100°C to form current/voltage terminals. The test piece, around which a platinum wire was wound so that the platinum wire closely contact with the test pieces, were sandwiched between alumina plates from both sides, and in a state where a load of approximately 500 g was being applied on the top alumina plate, a constant current of 0.1 mA was applied between two terminals on the outside, and the voltage between the two terminals on the inside was measured using a digital multimeter (trade name "Type TR6845", manufactured by ADVANTEST CORPORATION) in accordance with a direct current four terminals method.

The change of conductance with time between the initial conductance and the conductance after a predetermined period of time was determined, and then, the durability and the stability in terms of the conductance were obtained from the ratio thereof, using the following formula.

$$\texttt{Ratio of deterioration in conductance = [(initial}$$
$$\texttt{conductance - conductance after piece held for predetermined}$$
$$\texttt{period of time)/(initial conductance)] × 100 (\%)}$$

Furthermore, the content of silica was measured for the obtained zirconia sheet using an ICP analyzing apparatus (trade name "UOP-1 MKII," made by Kyoto Optronics Co., Ltd.).

In addition, carbon vapor deposition was carried out on the surface of the obtained zirconia sheet pieces in accordance with an ion sputtering method so that the film thickness became 150 Å, and photographs were taken using a scanning electron microscope (trade name "Type S-570," made by Hitachi Ltd.) and the grain diameter of all grains in a field of the photograph at a magnification of 15,000 times was measured using slide calipers, so that the average diameter, the maximum diameter, the minimum diameter and the coefficient of variation of the grains in the sintered body was calculated on the basis of the measured values. At this time, when grains diameter were measured using slide calipers, grains located at an end in the photograph in such a manner that the entirety of the grain is not in the visual field were not taken as an object for measurement. In addition, regarding the grain having different dimensions in the longitudinal and lateral directions, the average value between the major axis and the minor axis of the grain was regarded as the grain diameter thereof

In addition, the green sheet was cut into a rectangular piece having a size of 30 mm × 20 mm followed by being held in an electrical furnace at 1000 °C for 500 hours or more to prepare a test piece. Using an X-ray diffraction apparatus (trade name "RU-300," made by Rigaku Corporation) with X-rays of CuK $\alpha$1 (50 kV/300 mA), a wide angle goniometer and a curved crystal monochromer, 2$\theta$ was measured in a range from 25 ° to 35 °. The ratio of monoclinic phase (M) was calculated using the above described formula (1), from the respective peak intensities of the (-1, 1, 1) plane of monoclinic phase observed to have an interplanar spacing d of approximately 3.16, the (1, 1, 1) plane of tetragonal phase observed to have an lattice spacing d of approximately 2.96, the (1, 1, 1) plane of cubic crystal observed to have a lattice spacing d of approximately 2.93, and the (1, 1, 1) plane of monoclinic phase observed to have a lattice spacing d of approximately 2.84. The results are shown in Table 1.

Example 2

A slurry was prepared in the same manner as in the above described Example 1 except that a mixed powder of 100 mass parts of 4 mol % scandia partially stabilized zirconia powder (trade name "4ScSZ," made by Daiichi Kigenso Kagaku Kogyo Co., Ltd., content of silica: 30 ppm) which was calcined for 2 hours at 900°C and 0.5 mass parts of a highly pure alumina powder (trade name "TM-D," made by Taimei Chemicals Co., Ltd., content of silica: 15 ppm) was used.

A green sheet having a thickness of approximately 180 $\mu$m was prepared in the same manner as in Example 1 using the above described slurry, and this green sheet was processed in the same manner as in the above described Example 1 except that the conditions for firing were 3 hours at 1400°C, and thus, a square sheet having sides of approximately 100 mm and a thickness of 100 $\mu$m of 4 mol % scandia partially stabilized zirconia was obtained.

The strength, the resistance to a high temperature, the ratio of deterioration in the conductance, the ratio of monoclinic phase in the crystal structure through X-ray diffraction, the grain size and the content of silica in the obtained zirconia sheet were determined in the same manner as in Example 1, and the results are shown in Table 1.

Example 3

A slurry was prepared in the same manner as in the above described Example 1 except that a mixed powder of 70 mass parts of 4.5 mol % scandia partially stabilized zirconia powder (trade name "4.5ScSZ," made by Daiichi Kigenso Kagaku Kogyo Co., Ltd., content of silica: 70 ppm) which was calcined at 850°C for 2 hours and 0.8 mass parts of a highly pure alumina powder (trade name "TM-D," made by Taimei Chemicals Co., Ltd., content of silica: 15 ppm) was used.

A green sheet having a thickness of approximately 110 μm was prepared in the same manner as in Example 1 using the above described slurry, and this green sheet was fired in the same manner as in the above described Example 1, and thus, a square sheet having sides of approximately 100 mm and a thickness of 80 μm of 4.5 mol % scandia partially stabilized zirconia was obtained.

The strength, the resistance to a high temperature, the ratio of deterioration in the conductance, the ratio of monoclinic phase in the crystal structure through X-ray diffraction, the grain size and the content of silica in the obtained zirconia sheet were measured in the same manner as in the above described Example 1, and the results are shown in Table

Example 4

A slurry was prepared in the same manner as in the above described Example 1 except that a mixed powder of 70 mass parts of 5 mol % scandia partially stabilized zirconia powder (trade name "5ScSZ," made by Daiichi Kigenso Kagaku Kogyo Co., Ltd., content of silica: 130 ppm) which was calcined at 800°C for 2 hours and 1.5 mass parts of a highly pure alumina powder (trade name "TM-D," made by Taimei Chemicals Co., Ltd., content of silica: 15 ppm) was used.

A green sheet having a thickness of approximately 180 μm was fabricated in the same manner as in Example 1 using the above described slurry, and this green sheet was fired in the same manner as in the above described Example 1, and thus, a square sheet having sides of approximately 100 mm and a thickness of 150 μm of 5 mol % scandia partially stabilized zirconia was obtained.

The strength, the resistance to a high temperature, the ratio of deterioration in the conductance, the ratio of monoclinic phase in the crystal structure through X-ray diffraction, the grain size and the content of silica in the obtained zirconia sheet were measured in the same manner as in the above described Example 1, and the results are shown in Table 1.

Example 5

An ethanol solution of ethanol silicate having a concentration of 360 ppm of ethanol silicate was added to a 5 mol % scandia partially stabilized zirconia powder (trade name "5ScSZ," made by Daiichi Kigenso Kagaku Kogyo Co., Ltd. content of silica: 90 ppm) as that used in the above described Example 4 to give a mixture thereof, and the mixture was stirred and mixed, and after that, ethanol was removed through evaporation using a rotary evaporator and the residual material was dried at 100°C and calcined at 800°C for 2 hours to obtain a silica dispersing 5 mol % scandia partially stabilized zirconia powder.

A slurry was prepared in the same manner as in the above described Example 1 except that a mixed powder of 70 mass parts of the above described powder and 2 mass parts of a highly pure alumina powder (trade name "TM-D, " made by Taimei Chemicals Co., Ltd., content of silica: 15 ppm) was used.

A green sheet having a thickness of approximately 620 μm was fabricated in the same manner as in Example 1 using the above described slurry, and this green sheet was fired in the same manner as in the above described Example 1 to obtain a square sheet having sides of approximately 100 mm and a thickness of 500 μm of 5 mol % scandia partially stabilized zirconia.

The strength, the resistance to a high temperature, the ratio of deterioration in the conductance, the ratio of monoclinic phase in the crystal structure through X-ray diffraction, the grain size and the content of silica in the obtained zirconia sheet were measured in the same manner as in the above described Example 1, and the results are shown in Table

Example 6

To a mixed powder of 100 mass parts of a 4 mol % scandia partially stabilized zirconia powder as that used in the above described Example 1 and 1 mass part of a highly pure alumina powder, 6 mass parts of hydroxy ethyl cellulose (trade name "SP600," made by Daicel Chemical Industries, Ltd.), 4 mass parts of glycerin and 18 mass parts of water were added, and the mixture was kneaded for 2 hours at room temperature using a kneader, and thus; a scandia partially stabilized zirconia-based kneaded mixture was obtained.

This kneaded mixture was formed into a green sheet having a width of approximately 15 cm and a thickness of approximately 400 μm using a kneading and extrusion molding machine (trade name "FM-P100," made by MIYAZAKI IRON WORKS Co., Ltd). This green sheet was cut into a square having sides of 115 mm and fired at 1375°C in the same manner as in the above described Example 1, and thus, a square sheet having sides of 105 mm and a thickness of 350 $\mu$m of 4 mol % scandia partially stabilized zirconia was obtained.

The strength, the resistance to a high temperature, the ratio of deterioration in the conductance, the ratio of monoclinic phase in the crystal structure through X-ray diffraction, the grain size and the content of silica in the obtained zirconia sheet were measured in the same manner as described above, and the results are shown in Table 1.

Comparative Example 1

A scandium powder and a zirconium powder were mixed in such a manner that the amount of solid-dissolved scandia became 4 mol %, and the mixed powder was added to a nitric acid solution and dissolved while being heated, and thus, a mixed solution of scandium nitrate and zirconium nitrate was prepared.

Formic acid and polyethylene glycol (PEG), which were sol, were added to the mixed solution so that a mixed sol was obtained. As for the amount of the sol added at this time, the amount of formic acid was two times greater than that of the above described nitric acid in mol%, and the added amount of the PEG to the total amount of the mixed solution was 200 ml/kg.

This mixed sol was heated and dried for one day at 120°C so as to be converted to a mixed gel, and after that, the mixed gel was subjected to a heating process at 700°C for approximately 12 hours to obtain a 4 mol % scandia partially stabilized zirconia powder.

In the obtained scandia partially stabilized zirconia powder, scandia and zirconia were uniformly mixed at the atomic level so as to form a tetragonal single phase which did not include any other phase, such as the cubic phase and the monoclinic phase or the unreacted scandia phase. In addition, the content of silica was 7 ppm.

This scandia partially stabilized zirconia powder had a particle diameter of approximately 20 $\mu$m to 30 $\mu$m, and these particles were crushed and granulated so that the particle diameter became 2 $\mu$m to 3 $\mu$m, and after that, the powder was pressure formed under a pressing force of 1 ton/cm$^2$ by an isostatic press molding machine (CIP) to obtain a green sheet. This green sheet was fired at 1500°C, and thus, a square sheet having sides of approximately 100 mm and a thickness of 300 $\mu$m of 4 mol % scandia partially stabilized zirconia where 4 mol % of scandia was doped in zirconia was obtained.

The strength, the resistance to a high temperature, the ratio of deterioration in the conductance, the ratio of monoclinic phase in the crystal structure through X-ray diffraction, the grain size and the content of silica in the obtained zirconia sheet were measured in the same manner as in the above described Example 1, and the results are shown in Table 2.

Comparative Example 2

A slurry was prepared in the same manner as in the above described Example 1 except that a mixed powder of 70 mass parts of a 4 mol % scandia partially stabilized zirconia powder (average particle diameter: 2 $\mu$m, content of silica: 7 ppm) having only a tetragonal phase obtained in the same manner as in the above described Comparative Example 1 and 1 mass part of a highly pure alumina powder (trade name "TM-D," made by Taimei Chemicals Co., Ltd., content of silica: 15 ppm), as well as 16 mass parts of a binder as that used in the above described Example 1, were used.

This slurry was used to fabricate a green sheet having a thickness of approximately 150 $\mu$m in the same manner as in Example 1, and this green sheet was processed in the same manner as in the above described Example 1 except that the temperature for firing was 1550°C, and thus, a square sheet having sides of approximately 100 $\mu$m and a thickness of 120 $\mu$m of 4 mol % scandia partially stabilized zirconia was obtained.

The strength, the resistance to a high temperature, the ratio of deterioration in the conductance, the ratio of monoclinic phase in the crystal structure through X-ray diffraction, the grain size and the content of silica in the obtained zirconia sheet were measured in the same manner as in Example 1, and the results are shown in Table 2.

Comparative Example 3

An ethanol solution of ethanol silicate having a concentration of 920 ppm of ethanol silicate was added to a 4 mol % scandia partially stabilized zirconia powder (trade name "4ScSZ," made by Daiichi Kigenso Kagaku Kogyo Co., Ltd., content of silica: 80 ppm) as that used in the above-described Example 1, and the mixture was stirred and mixed for 30 minutes at room temperature using a rotary evaporator, and after that, the temperature was raised to 50°C while the pressure was reduced so that the ethanol was removed through evaporation followed by being dried at 80°C. The residual material was taken out of the evaporator and calcined at 600°C, and thus, a silica dispersing 4 mol % scandia partially stabilized zirconia powder was obtained.

A slurry was prepared in the same manner as in the above described Example 1 except that a mixed powder of 70 mass parts of the obtained powder and 2 mass parts of a highly pure alumina powder (trade name "TM-D," made by Taimei Chemicals Co., Ltd., content of silica: 15 ppm) was used.

The slurry was used to fabricate a green sheet having a thickness of approximately 250 $\mu$m in the same manner as in Example 1, and this green sheet was processed in the same manner as in the above described Example 1 except that the temperature for firing was 1300°C, and thus, a square sheet having sides of approximately 100 mm.and a thickness of 200 $\mu$m of 4 mol % scandia partially stabilized zirconia was obtained.

The strength, the resistance to a high temperature, the ratio of deterioration in the conductance, the ratio of monoclinic phase in the crystal structure through X-ray diffraction, the grain size and the content of silica in the obtained zirconia sheet were measured in the same manner as in Example 1, and the results are shown in Table 2.

Comparative Example 4

A square sheet having sides of approximately 100 mm and a thickness of 200 $\mu$m of 4 % scandia partially stabilized zirconia was obtained in the same manner as in Comparative Example 3 except that the powder was forced to be cooled by an electric fan during the cooling process from 500°C to 200°C after heating and firing so that the time for the cooling process was 10 minutes.

The strength, the resistance to a high temperature, the ratio of deterioration in the conductance, the ratio of monoclinic phase in the crystal structure through X-ray diffraction, the grain size and the content of silica in the obtained zirconia sheet were measured in the same manner as in the above described Example 1, and the results are shown in Table 2.

[Table 1]

| Example | 1 | 2 | 3 | 4 | 5 | 6 |
|---|---|---|---|---|---|---|
| Raw material zirconia powder | 4ScSZ | 4ScSZ | 4.5ScSZ | 5ScSZ | 5ScSZ | 5ScSZ |
| Content of silica (ppm) | 80 | 30 | 70 | 130 | 90 | 80 |
| Additives Alumina (mass %) | 1 | 0.5 | 0.8 | 1.5 | 2 | 1 |
| Silica (ppm) | - | - | - | - | 360 | - |
| Thickness of green sheet ($\mu$m) | 100 | 125 | 150 | 180 | 620 | 400 |
| Temperature for firing (°C) | 1350 | 1400 | 1350 | 1350 | 1350 | 1375 |
| Period between 500°C and 200°C (minutes) | 60 | 25 | 50 | 80 | 65 | 60 |
| Sheet form Dimensions (mm) | 100 (sides of square) | 100 (sides of square) | 100 (sides of square) | 100 (sides of square) | 100 (sides of square) | 105 (sides of square) |
| Thickness ($\mu$m) | 80 | 100 | 120 | 150 | 500 | 350 |
| Content of silica (ppm) | 80 | 30 | 70 | 130 | 430 | 90 |

(continued)

| | | | | | | |
|---|---|---|---|---|---|---|
| Grain size of fired body (μm) | | | | | | |
| Maximum diameter | 0.47 | 0.93 | 0.51 | 0.74 | 0.88 | 0.40 |
| Average diameter | 0.25 | 0.49 | 0.28 | 0.36 | 0.56 | 0.24 |
| Minimum diameter | 0.12 | 0.19 | 0.16 | 0.16 | 0.23 | 0.15 |
| Coefficient of variation (%) | 33 | 37 | 29 | 34 | 39 | 31 |
| Endurance against flexural strength | | | | | | |
| Initial flexural strength (Mpa) | 980 | 1000 | 920 | 850 | 900 | 890 |
| Weibull modulus | 11.4 | 10.3 | 11.7 | 12.9 | 10.8 | 10.4 |
| After 500 hours (%) | 95 | 94 | 93 | 92 | 97 | 93 |
| Ratio of monoclinic phase (M: %) | 11 | 42 | 7 | 25 | 2 | 33 |
| Ratio of deterioration in conductance | | | | | | |
| Initial conductance (S/cm) | 0.08 | 0.09 | 0.1 | 0.11 | 0.11 | 0.1 |
| After 500 hours (%) | 25 | 26 | 27 | 23 | 28 | 22 |
| After 1000 hours (%) | 27 | 30 | 30 | 28 | 30 | 31 |

[Table 2]

| Comparative Examples | 1 | 2 | 3 | 4 |
|---|---|---|---|---|
| Raw material zirconia powder | 4ScSZ | 4ScSZ | 4.5ScSZ | 4ScSZ |
| Content of silica (ppm) | 7 | 7 | 80 | 80 |
| Additives Alumina (mass %) | - | - | 1 | 1 |
| Silica (ppm) | 7 | 7 | 920 | 920 |

(continued)

| Additives Thickness of green sheet ($\mu$m) | 340 | 150 | 250 | 250 |
|---|---|---|---|---|
| Temperature for firing (°C) | 1500 | 1300 | 1300 | 1300 |
| Period between 500°C and 200°C (minutes) | 320 | 280 | 770 | 10 |
| Sheet form Dimensions (mm) Dimensions (mm) Thickness ($\mu$m) | 100 (sides of square) 300 | 100 (sides of square) 120 | 100 (sides of square) 200 | 100 (sides of square) 200 |
| Content of silica (ppm) | 5 or lower | 5 or lower | 1010 | 1010 |
| Grain size of fired body ($\mu$m) Maximum diameter Average diameter Minimum diameter Coefficient of variation (%) | 3.2 1 0.42 54 | 0.38 0.9 0.06 36 | 1.1 0.41 0.07 48 | 1 0.41 0.07 48 |
| Endurance against nexura Initial flexural strength (Mpa) Weibull modulus After 500 hours (%) | 1300 8.2 77 | 840 9.1 1 79 | 1060 9.7 82 | 1060 5.9 82 |
| Ratio of monoclinic phase (M: %) | 0 | 0 | 86 | 86 |
| Ratio of deterioration in conductance Initial conductance (S/cm) After 500 hours (%) After 1000 hours (%) | 0.1 31 37 | 0.08 32 39 | 0.11 38 46 | 0.1 45 Crack in test pieces |

## INDUSTRIAL APPLICABILITY

According to the present invention, as described above, by specifying the crystal structure and the Weibull modulus of a scandia partially stabilized zirconia electrolyte, a scandia partially stabilized zirconia electrolyte sheet for a fuel cell having excellent stability in the ion conductance, which has been improved in terms of inconsistency in the strength and sustainability at a high temperature which relate to properties lacking in zirconia based ceramics of this kind and become problems in industrially mass production, is provided. In addition, the present electrolyte sheet for a fuel cell can be effectively used as a solid oxide electrolyte membrane for a fuel cell because of its excellent ion conductivity, stability and sustainability in the strength at a high temperature.

**Claims**

1. An electrolyte sheet for a solid oxide fuel cell, **characterized in**:

   being formed by a doctor blade method or an extrusion molding method;
   being a scandia partially stabilized zirconia sheet, wherein 4 mol % to 6 mol % scandia is doped in a solid zirconia;
   a crystal structure thereof having a polycrystalline structure having a main body of tetragonal and including monoclinic phase, wherein a ratio of monoclinic phase (M), calculated by below described formula (1) from a diffraction peak intensity using X-ray diffraction, is 1 % to 80 %; and
   a Weibull modulus (m) thereof is not less than 10:

   a ratio of monoclinic phase (M: %) = [{monoclinic (1 1 1)

   + monoclinic (-1, 1, 1)}/{tetragonal and cubic (1, 1, 1) +

   monoclinic (1, 1, 1) + monoclinic (-1, 1, 1)}] × 100 ······ (1).

2. The electrolyte sheet for a solid oxide fuel cell according to claim 1, wherein an average value of a grain size of an electrolyte sintered body as observed by using a scanning electron microscope in the electrolyte sheet is 0.2 $\mu$m to 0.8 $\mu$m, a maximum diameter thereof is 0.4 $\mu$m to 1.5 $\mu$m, a minimum diameter is 0.1 $\mu$m to 0.3 $\mu$m, and a coefficient of variation thereof is not greater than 40 %.

3. The electrolyte sheet for a solid oxide fuel cell according to claim 1 or 2, including 10 ppm to 500 ppm of silica.

4. The electrolyte sheet for solid oxide fuel cells according to any one of claims 1 to 3, wherein an area is not smaller than 50 cm$^2$ and a thickness is 50 $\mu$m to 800 $\mu$m.

5. A method for producing the electrolyte sheet for a solid oxide fuel cell according to any one of claims 1 to 4, **characterized in**:

   using a scandia partially stabilized zirconia powder as a raw powder, wherein the powder is calcined at 800°C to 1200°C, a ratio of monoclinic phase in a crystal structure thereof is 1 % to 80 %, and 4 mol % to 6 mol % of scandia is doped in solid zirconia;
   forming a green sheet from a slurry, paste or kneaded material containing the powder by a doctor blade method or an extrusion molding method;
   cutting the green sheet into a predetermined shape to be shaped body;
   placing the shaped body on a refractory slab and heating at 1300°C to 1450°C, and a period of time for a temperature of the shaped body to be lower to 200°C from 500°C during a process of cooling being 10 minutes to 90 minutes.

6. A solid oxide fuel cell, **characterized in that** the electrolyte sheet for a solid oxide fuel according to any one of claims 1 to 4 is incorporated.

## INTERNATIONAL SEARCH REPORT

| | International application No. |
|---|---|
| | PCT/JP2006/302185 |

A.  CLASSIFICATION OF SUBJECT MATTER
*H01M8/02*(2006.01), *H01B1/06*(2006.01), *H01M8/12*(2006.01)

According to International Patent Classification (IPC) or to both national classification and IPC

B.  FIELDS SEARCHED

Minimum documentation searched (classification system followed by classification symbols)
H01M8/00-8/24, H01B1/06, C04B35/48

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y<br>A | JP 2003-20272 A  (Nippon Shokubai Co., Ltd.),<br>24 January, 2003 (24.01.03),<br>Full text<br>(Family: none) | 1-4,6<br>5 |
| Y<br>A | JP 2003-22822 A  (Nippon Shokubai Co., Ltd.),<br>24 January, 2003 (24.01.03),<br>Full text<br>(Family: none) | 1-4,6<br>5 |
| Y<br>A | JP 2003-22821 A  (Nippon Shokubai Co., Ltd.),<br>24 January, 2003 (24.01.03),<br>Full text<br>(Family: none) | 1-4,6<br>5 |

| ☒  Further documents are listed in the continuation of Box C. | ☐  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    01 May, 2006 (01.05.06) | Date of mailing of the international search report<br>    16 May, 2006 (16.05.06) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/302185

C (Continuation).　DOCUMENTS CONSIDERED TO BE RELEVANT

| Category* | Citation of document, with indication, where appropriate, of the relevant passages | Relevant to claim No. |
|---|---|---|
| Y<br>A | JP 8-217447 A　(Toshiba Corp.),<br>27 August, 1996 (27.08.96),<br>Full text<br>(Family: none) | 1-4,6<br>5 |
| Y | JP 8-12426 A　(Shinagawa Refractories Co.,<br>Ltd.),<br>16 January, 1996 (16.01.96),<br>Full text<br>(Family: none) | 3 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3458863 B
- JP 2003020272 A

**Non-patent literature cited in the description**

- *Journal of the Ceramics Society,* 1997, vol. 105 (1), 37-42
- *J. Am. Ceram. Soc.,* 1999, vol. 82 (10), 2861-64
- **YOSHIHARU OZAKI.** *Ceramic Strength and Estimation of Ceramics Reliability,* 11
- *Refractory,* 1987, 39-489